# EUROPEAN PATENT SPECIFICATION

(11) **EP 2 805 521 B1**
(45) Date of publication and mention of the grant of the patent: **26.12.2018**
(21) Application number: 12865811.9
(22) Date of filing: 19.01.2012
(51) Int. Cl.: H04N 21/2343, G06T 3/40

(54) **RIGHT SIZING ENHANCED CONTENT TO GENERATE OPTIMIZED SOURCE CONTENT**
RICHTIGE DIMENSIONIERUNG VON ERWEITERTEM INHALT ZUR ERZEUGUNG VON OPTIMIERTEM QUELLENINHALT
RAJUSTEMENT D'UN CONTENU AMÉLIORÉ POUR GÉNÉRER UN CONTENU SOURCE OPTIMISÉ

(43) Date of publication of application: 26.11.2014
(73) Proprietor: Hewlett-Packard Development Company, L.P., Houston, TX 77070 (US)
(72) Inventor: BIGGS, Kent E., Houston, Texas 77070 (US); GONDEK, Jay S., Vancouver, Washington 98683 (US); HENG, Soda, Houston, Texas 77070 (US); FLYNN, Thomas J., Houston, Texas 77070 (US)
(74) Representative: Liesegang, Eva
(86) International application number: PCT/US2012/021895
(87) International publication number: WO 2013/109281

(56) References cited:
- EP-A2- 1 310 911
- EP-A2- 1 662 771
- WO-A1-01/40999
- WO-A1-99/66716
- US-A- 6 058 248
- US-A1- 2002 167 460
- US-A1- 2004 013 320
- US-A1- 2007 283 247
- US-A1- 2011 085 742
- US-B1- 6 549 214

## Description

### BACKGROUND

Image scaling is used to resize a digital image. Enlarging an image (upscaling or interpolating) is used for making a small image fit a larger screen or destination resolution. Reducing an image (down sampling/down sample process) is used for taking a higher resolution image and making it fit a smaller screen or destination resolution. The file containing the up sampled image may be larger than the original image file, while the file containing the down sampled image may be smaller than the original image file.

In this regard, EP 1310 911 A2 teaches an image enlarging process where in order to reach a desired magnification ratio, an original image is iteratively magnified by a factor of two until the resulting image is larger than indicated by the desired magnification ratio, and the resulting image is reduced in size to match the desired magnification ratio.

Moreover, EP 1662 771 A2 teaches an image enlarging process where in order to reach a desired magnification ratio, an original image is iteratively magnified by a factor of two as long as the resulting image is still smaller than indicated by the desired magnification ratio, and the resulting image is then further increased in size to match the desired magnification ratio.

Furthermore, WO 99/66716 A1 teaches to enlarge image portions to fit a resolution of one of multiple display devices which cooperatively display the image.

The invention provides a computer implemented method according to claim 1, a system according to claim 5, and a computer-readable medium according to claim 10. Embodiments of the invention are defined in the dependent claims.

### BRIEF DESCRIPTION OF THE DRAWINGS

Some embodiments of the invention are described, by way of example, with respect to the following figures:
FIG. 1 is a diagram of a system, according to an example, used to right size an image to fit a destination resolution.
FIG. 2 is a diagram of a system, according to an example, used to right size an image to fit a destination resolution, where the source content does not reside natively on the source content device.
FIG. 3 is a diagram of a system, according to an example, illustrating a destination resolution of a display(s).
FIG. 4 is a block diagram of a system, according to an example, used to right size an image to fit a destination resolution.
FIG. 5 is a block diagram of a system, according to an example, used to used to right size an image to fit a destination resolution.
FIG. 6 is a flow chart illustrating a method, according to an example, to right size an image to fit a destination resolution.
FIG. 7 is a flow chart illustrating a method, according to an embodiment, executed to right size an image to fit a destination resolution.
FIG. 8 is a flow chart illustrating a method, according to an embodiment, for the execution of an operation used to process source content so as to generate enhanced content.
FIG. 9 is a flow chart illustrating a method for the execution of an operation, according to an embodiment, used to process enhanced content so as to generate optimized source content.
FIG. 10 is a flow chat illustrating a method used to execute operation, according to an embodiment, to apply a scaling filter to set the enhanced content to the aspect ratio retrieved from the resolution matching data and to apply user variables to this enhanced content.
FIG. 11 shows a diagrammatic representation of a machine in the example form of a computer system that executes a set of instructions to perform any one or more of the methods discussed herein.

### DETAILED DESCRIPTION

Illustrated is a system and method to right size an image to fit a destination resolution. Right sizing, use used herein, includes scaling an image up (upscaling) or down (down sampling) to fit the destination resolution. An image, as used herein, is a software file composed of either pixels, vector (geometric) data, or a combination of the two. Example software files include files formatted using the Portable Network Graphics (PNG) format, the Joint Photographic Experts Group (JPEG) format, Tagged Image File Format (TIFF), or the Moving Picture Experts Group (MPEG) format. Examples of an image include source content, enhanced content, or optimized source content. A destination resolution, as used herein, is the number of distinct pixels in each dimension that can be displayed on a display device (e.g., a single display) or plurality of display devices (e.g., a bank of displays). The destination resolution also includes an aspect ratio value. For example, a digital television may have a resolution of 1920×1080 pixels and an aspect ratio of 16:9.

In some example embodiments, an image is process using resolution synthesis and resolution matching to generate optimized source content. Resolution synthesis (RS), as will be described in more detail below, scales the image to the closest power of two of the destination resolution and generates an enhanced content via an iterative process. Enhanced content, as used herein, is an image to which RS has been applied. Resolution matching optimizes this enhanced content based upon the resolution and aspect ratio of the destination resolution. The use of resolution synthesis and resolution matching produces an optimized source content (i.e., an image) that is scaled to the destination resolution of a device or plurality of devices.

As used herein, down sampling is a reduction in spatial resolution while keeping the same two-dimensional (2D) representation of the source content. This down sampling may be performed using a down sample filter. A down sample filter (i.e., the down sample process) may be a decimation/duplication filter, a bicubic filter, a bilinear interpolation filter, least-squares filters, orthogonal wavelets filter, a biorthogonal wavelets filter, or a binomial filter. Further, this down sample filter may be adaptive or non-adaptive in nature.

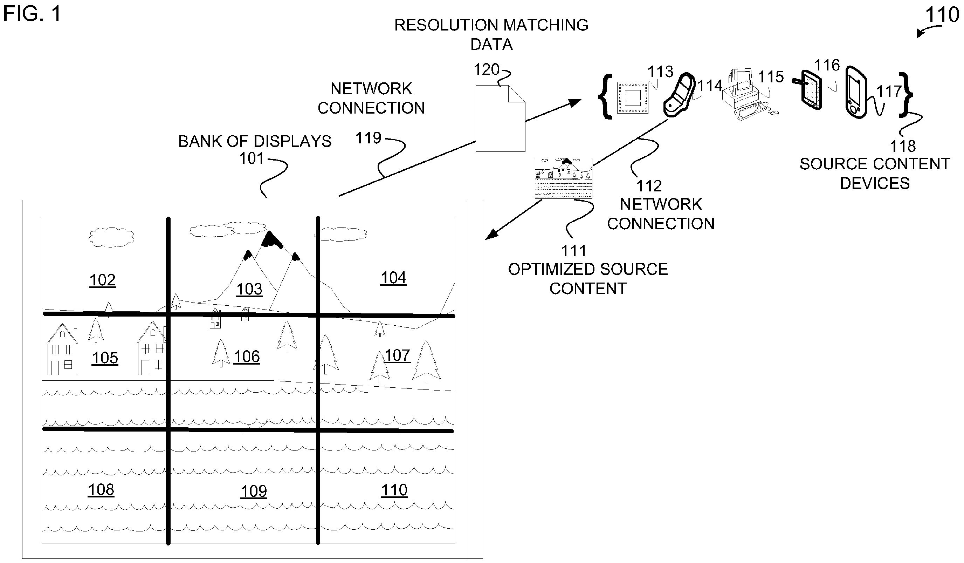

FIG. 1 is a diagram of an example system 100 used to right size an image to fit a destination resolution. Shown is a bank of displays 101 that includes displays 102-110. Displayed on this bank of displays 101 is optimized source content 111. This bank of displays 101 is provided for illustrative purposes and a single display device may be used as the basis for a destination resolution. The optimized source content 111 is generated from source content that is processed by one of the source content devices 118. This source content resides natively on one of the source content devices 118. Example source content devices 118 include: a processor 113, cell phone 114, computer system 115, tablet 116, or smart phone 117. The processor 113 may be an embedded processor that is part of the bank of displays 101, a System On a Chip (SOC), or an accelerator such as a Graphical Processing Unit (GPU) that is operatively connected to the bank of displays 101. Operatively connected, as used herein, includes a logical or physical connection. As illustrated, one or more of the source content devices 118 may be connected to the bank of displays via a network connection 112 or 119. Examples of the network connections 112 or 119 include a wireless connection such as a Bluetooth, 802.11a-g, or some other suitable wireless connection using an wireless transport protocol. Further examples of the network connection 112 include a wired connection using ethernet, a hardware (e.g., copper wire) or optical bus, or some other suitable wired connection using a wired transport protocol. The optimized source content 111 is provided for display to the bank of displays 101 via the network connection 112.

Additionally shown, is resolution matching data 120 that is provided to one of the source content devices 118 via a network connection 119. The resolution matching data 120 includes the destination resolution for the bank of displays 101. For example, if the bank of displays 101 is made up of nine (9) displays 102-110 each having a resolution of 1920x1080 and a 16:9 aspect ratio, then the aggregate resolution would be 5760x3240 and the aspect ratio 16:9. This aggregated resolution and aspect ratio would be provided as the resolution matching data 120. In some example embodiments, the resolution matching data also includes the number of displays in a bank of displays (e.g., the bank of displays 101 has nine displays 102-110). Also included in the resolution matching data 120 may be user variables such as a clip percentage value, stretch value, or black space value (e.g., pill box or letter box). These user values are used to set certain features of the display(s) associated with the destination resolution. As will be discussed in more detail below, the resolution matching data 120 is used in the processing of the source content into optimized source content 111 for display on the bank of displays 101. This processing involves the use of resolution synthesis and resolution matching to generate the optimized source content 111. Collectively the bank of displays 101, one or more of the source content devices 118, and network connections 112 and 119 may be referenced herein as a video rendering pipeline.

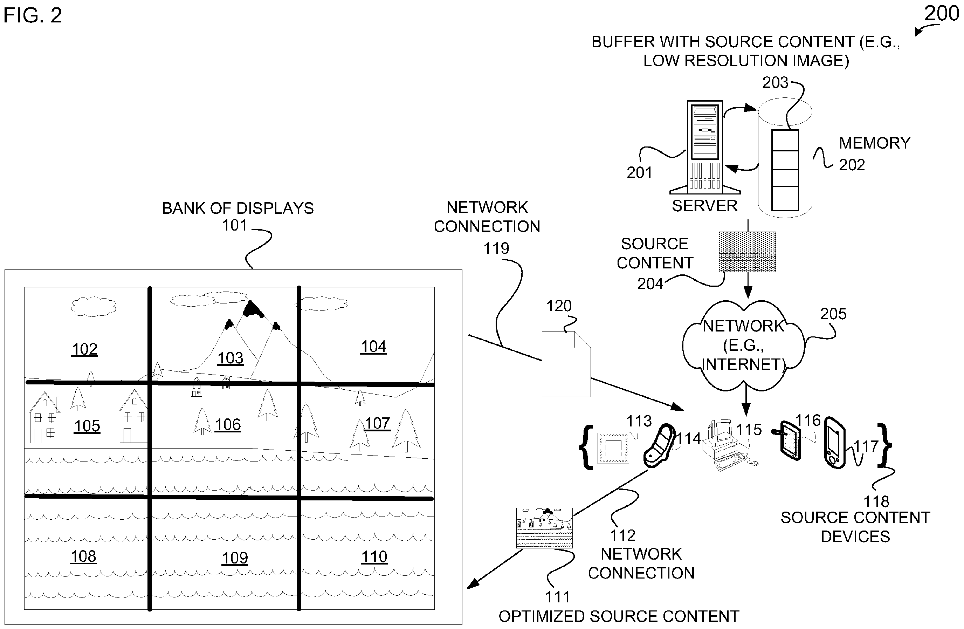

FIG. 2 is a diagram of an example system 200 used to right size an image to fit a destination resolution, where the source content does not reside natively on the source content device. Shown is a server 201 that includes a memory 202. Residing on the memory 202 is a buffer 203 that contains source content 204. This source content 204 may be a lower resolution image as compared to the resolution of the optimized source content 111. For example, the source content 204 may have a resolution of 1920x1080, while the optimized source content 111 may have a resolution of 5760x3240. As illustrated, source content 204 is transmitted by the server 201 across a network 205 and received by one of the source content devices 118. This source content is processed by one of the source content devices 118. This processing involves the use of resolution synthesis and resolution matching to generate the optimized source content 111, and as illustrated herein shows source content 204 that resides non-natively on the source content devices 118.

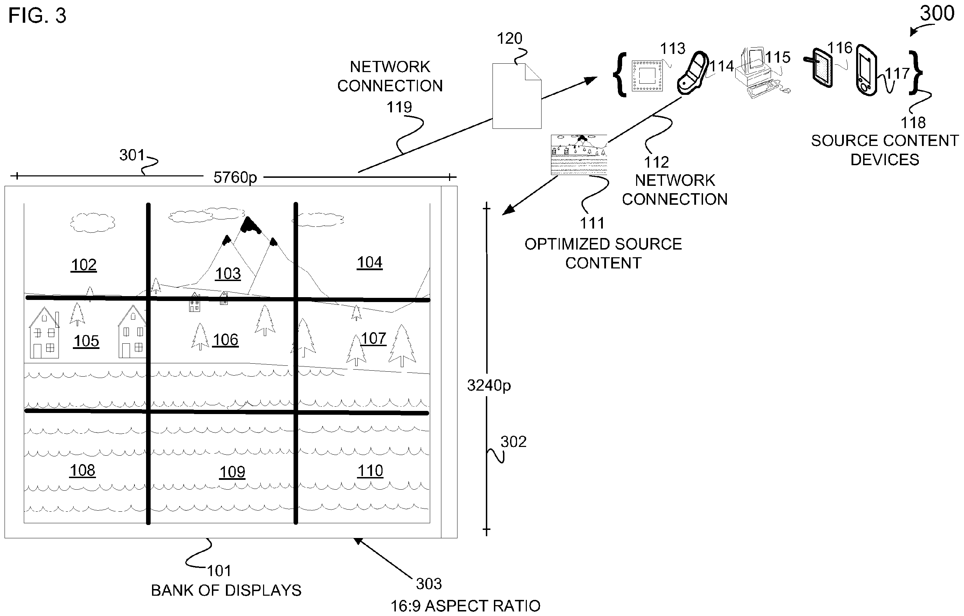

FIG. 3 is a diagram of an example system 300 illustrating a destination resolution of a display(s). Shown is the bank of displays 101 that includes width of 5760 pixels (shown at 301) and a height of 3240 pixels (shown at 302). The aspect ratio for the bank of displays 101 is 16:9 (shown at 303). The optimized source content 111 is displayed on the bank of displays 101 as follows: the upper left of the optimized source content 111 is shown on display 101, the upper middle of the optimized source content 111 is shown on the display 103, the upper right of the optimized source content 111 is shown on the display 104, the center left of the optimized source content 111 is shown on the display 105, the center of the optimized source content 111 is shown on the display 106, the center right of the optimized source content 111 is shown on the display 107, the bottom left of the optimized source content 111 is shown on the display 108, the bottom middle of the optimized source content 111 is shown on the display 109, and the bottom right of the optimized source content 111 is shown on the display 110.

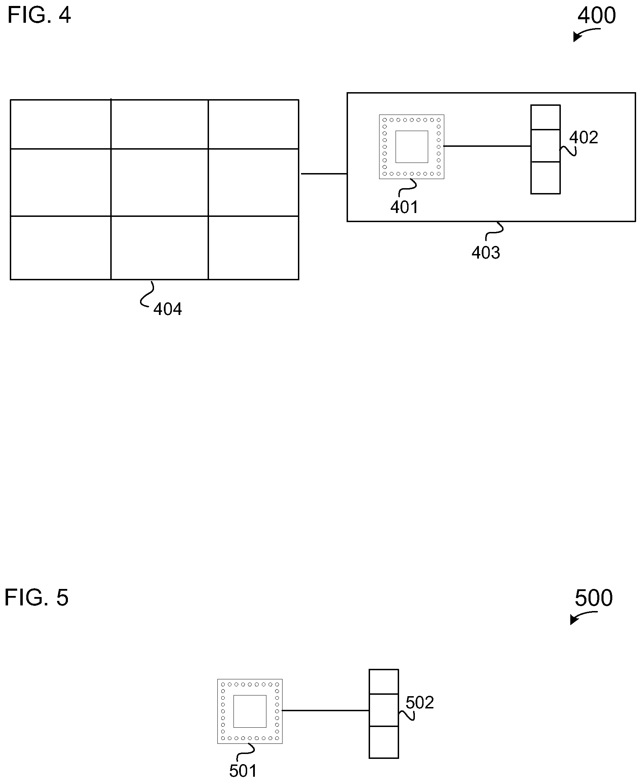

FIG. 4 is a block diagram of an example system 400 used to right size an image to fit a destination resolution. The various blocks shown herein may be implemented in software, hardware, or firmware. The system 100 is an example of the system 400. These blocks may be operatively connected. Shown is a processor 401 operatively connected to a memory 402. The processor 401 and memory 402 reside upon a source content device 403. An example of the source content 403 is one of the source content devices 118. The source content device 403 is used to process source content for display, the process to include an application of a resolution synthesis and a right sizing process to the source content to generate optimized source content. Operatively connected to the source content device 403 is a bank of displays 404. These bank of displays 404 display the optimized source content, the optimized source content scaled to a destination resolution through the application of the resolution synthesis and the right sizing process. In some example embodiments, the source content is received from a server. The source content may be a lower resolution image as compared to a resolution of the optimized source content. The source content device 403 may be an embedded processor that physically resides on the bank of displays 404. In some example embodiments, right sizing process includes at least one of a decimation/duplication filter, a bicubic filter, a bilinear interpolation filter, least-squares filters, orthogonal wavelets filter, a biorthogonal wavelets filter, or a binomial filter

FIG. 5 is a block diagram of an example system 500 used to used to right sizing an image to fit a destination resolution. The system 100 is an example of the system 500. Shown is a processor 501 operatively connected to a memory 502. The processor 501 and memory 502 may reside on one of the source content devices 118. The processor 501 may be an Application-Specific Integrated Circuit (ASIC), or some other suitable integrated circuit. The memory 502 is in communication with the central processor 501, the memory 502 including a computer-readable medium having instructions stored thereon for causing a suitably programmed computer to execute a method comprising receiving resolution matching data that includes a user variable associated with a display device. The method may also include instructions for retrieving source content to be processed, in part, using the resolution matching data. Additionally, the method may include instructions for upscaling iteratively the source content, by a factor of two, pixels associated with the source content to create enhanced content. There may also be instructions included in the method for right sizing the enhanced content. The method may also instructions for applying a scaling filter and the user variables to the enhanced content to generate optimized source content for display on the display device. In some example embodiments, the user variable includes at least one of a clip percentage value, a stretch value, or a black space value. The non-transitory computer-readable medium may be part of a system on a chip associated with the display device. In some example embodiments, the right sizing includes at least one of a decimation/duplication filter, a bicubic filter, a bilinear interpolation filter, least-squares filters, orthogonal wavelets filter, a biorthogonal wavelets filter, or a binomial filter. The scaling filter may include at least one of a bicubic filter, or a bilinear interpolation filter.

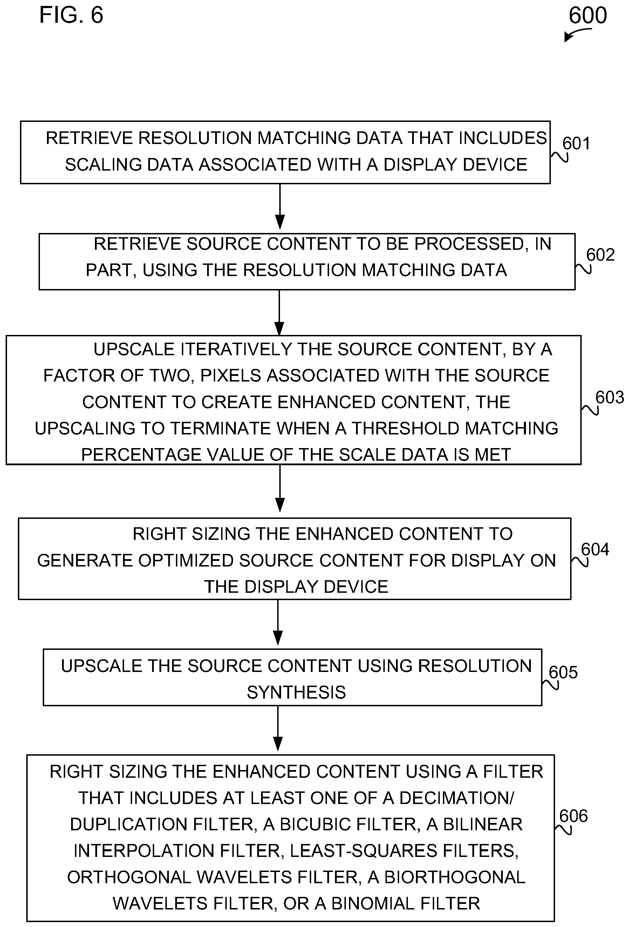

FIG. 6 is a flow chart illustrating an example method 600 to right sizing an image to fit a destination resolution. The method 600, and operations 601-606 included therein, may be executed on one of the source content devices 118. Operation 601 is executed to retrieve resolution matching data that includes scaling data associated with a display device. Scaling data, as used herein, is the pixel value associated with the destination resolution. For example, if each display is a bank of nine (9) displays has a resolution of 1920x1080, then the scaling data would be 7680x4320 pixels. Operation 602 is executed to retrieve source content to be processed, in part, using the resolution matching data. Operation 603 is executed to upscale iteratively the source content, by a factor of two, pixels associated with the source content to create enhanced content, the upscaling to terminate when a threshold matching percentage value of the scale data is met. As used herein, the threshold matching percentage value is a value representing a percentage of the scale data. Operation 604 is executed to right sizing the enhanced content to generate optimized source content for display on the display device. In some example embodiments, the resolution matching data includes at least one of an aspect ratio value, a clip percentage value, stretch value, or black space value. Operation 605 is executed to upscale the source content using resolution synthesis. In some example embodiments, right sizing includes at least one of upscaling or down sampling. Operation 606 is executed to right size the enhanced content using a filter that includes at least one of a decimation/duplication filter, a bicubic filter, a bilinear interpolation filter, least-squares filters, orthogonal wavelets filter, a biorthogonal wavelets filter, or a binomial filter.

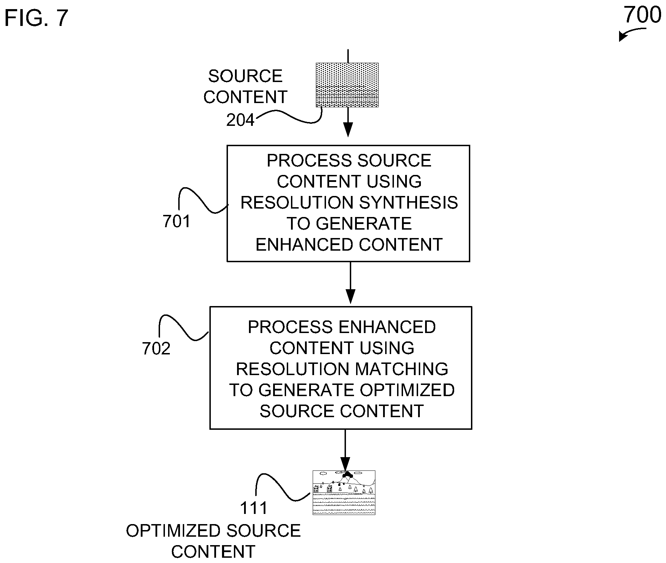

FIG. 7 is a flow chart illustrating an example method 700 executed to right size an image to fit a destination resolution. This method 700 is executed on one of the source content devices 118. Shown is source content 204 that is provided to the operation 701 for processing. The source content 701 may reside natively on one of the source content devices 118 (see FIG. 1), or the source content may reside non-natively (see FIG. 2 and source content 204) on the server 201. Operation 701 is executed to process the source content using resolution synthesis to generate an enhanced content. Resolution Synthesis ("RS") is described in U.S. Pat. No. 6,075,926 titled "Computerized Method for Improving Data Resolution". Specifically, U.S. Pat. No. 6,075,926 illustrates RS as being used to generate a version of a source image enhanced by a factor of greater than two (e.g., 96 dpi to 300 dpi.). (U.S. Pat. No. 6,075,926, Col. 9, lines 40-44). A source image and source content 204 are synonymous as used herein. Further, a "source image enhanced" is enhanced content as used herein. An enhanced source image is upscaled or interpolated. Additionally, U.S. Pat. No. 6,075,926 elaborates on the use of RS in stating:
The function of the 2x-RS algorithm is to replace a single low-resolution pixel like target pixel 303 with four, interpolated, high-resolution pixels 307, denoted vector x. If pixel 301 in FIG. 3 is 1/96th -inch by 1/96th - inch, pixel 307 will comprise four cells of 1/192nd -inch by 1/192nd -inch each. More generally, for enhancement by a factor E (where E>1), the low-resolution pixel would be replaced with E^2 pixels. (U.S. Pat. No. 6,075,926, Col. 10, lines 21-28).

Though the use of RS, as illustrated in U.S. Pat. No. 6,075,926, an enhanced content is generated by the execution of operation 701. Additionally, certain parameters may be provided to the operation 701. These parameters may be retrieved from a user or from a device such as one of the source content devices 118. These example parameters include the threshold matching percentage (%) value, an image, a destination resolution, smoothness values, noise values, the encoding format for the enhanced content, and the name of the file containing the optimized source content 111. Operation 702 is executed to process the enhanced content using resolution matching so as to generate optimized source content 111.

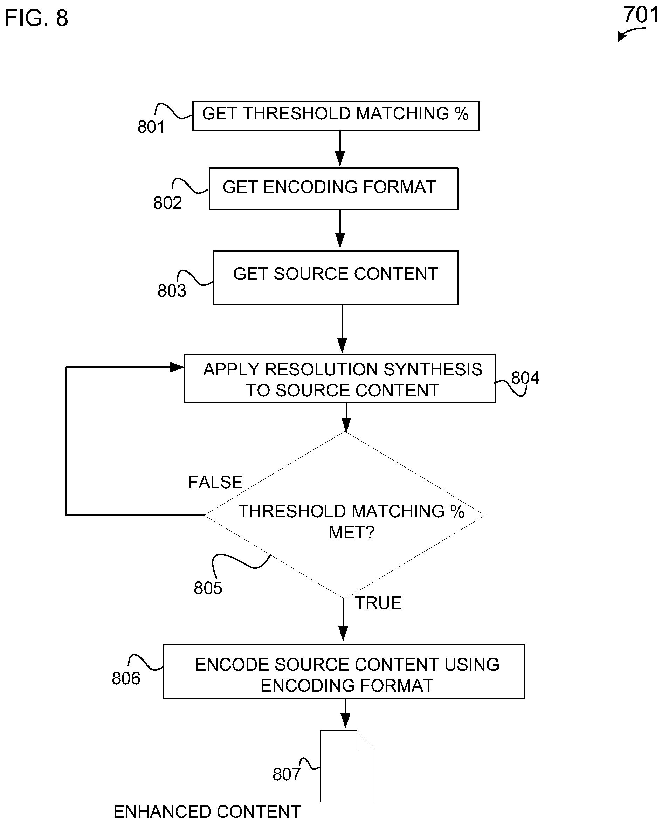

FIG. 8 is a flow chart illustrating an example method for the execution of operation 701 used to process source content so as to generate enhanced content. Operation 801 is executed to get a threshold matching percentage (%) value. This threshold matching percentage may be a numeric value representing a percentage of a destination resolution that is to be approximated using RS. For example, the threshold matching percentage value may be 90% such that RS is to be used to approximate 90% of the pixel values associated with the destination resolution (i.e., aggregated resolution). Operation 802 is executed to get an encoding format for the enhanced content 807. This encoding format may be retrieved from one of the source content devices 118, and may include one of the above described formats (e.g., JPEG, MPEG etc.). Operation 803 is executed to get the source content (e.g., source content 204). Operation 804 is executed to apply RS to the source content. Decision operation 805 is executed to determine whether the threshold matching percentage value has been met. In cases where decision operation 805 evaluates to "false" operation 804 is re-executed iteratively. In cases where decision operation 805 evaluates to "true", and operation 806 is executed. Operation 806 is executed to encode the source content to generate enhanced content 807.

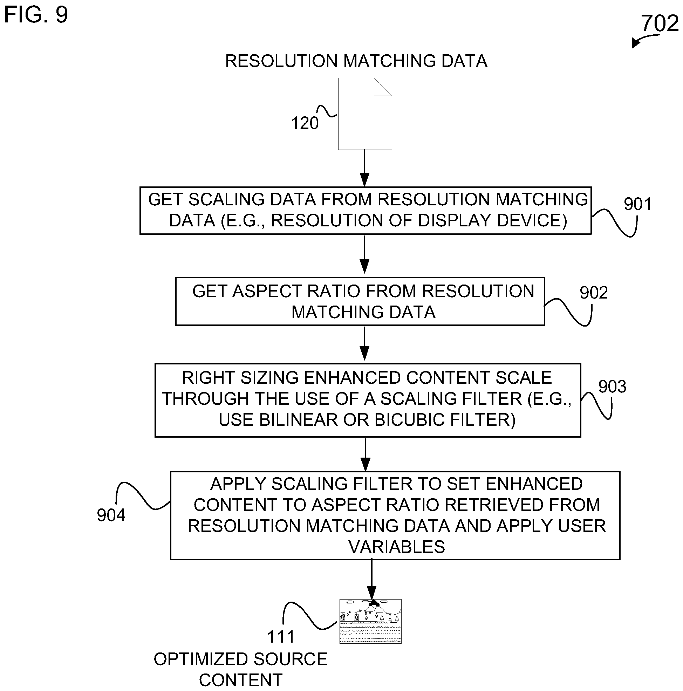

FIG. 9 is a flow chart illustrating an example method for the execution of operation 702 used to process enhanced content so as to generate optimized source content. Shown is resolution matching data 120 that is received by the operation 702. Operation 901 is executed to get scaling data from the resolution matching data. The scaling data corresponds to the resolution of the display device (i.e., the destination resolution pixel values). Operation 902 is executed to get the aspect ratio from the resolution matching data. Operation 903 is executed to right size the enhanced content generated via RS. Operation 903 may be a down sampling filter as illustrated herein. Operation 904 is executed to apply a scaling filter to set the enhanced content to the aspect ratio retrieved from the resolution matching data 120 and to apply user variables to this enhanced content. Optimized source content 111 is generated through the execution of operation 702.

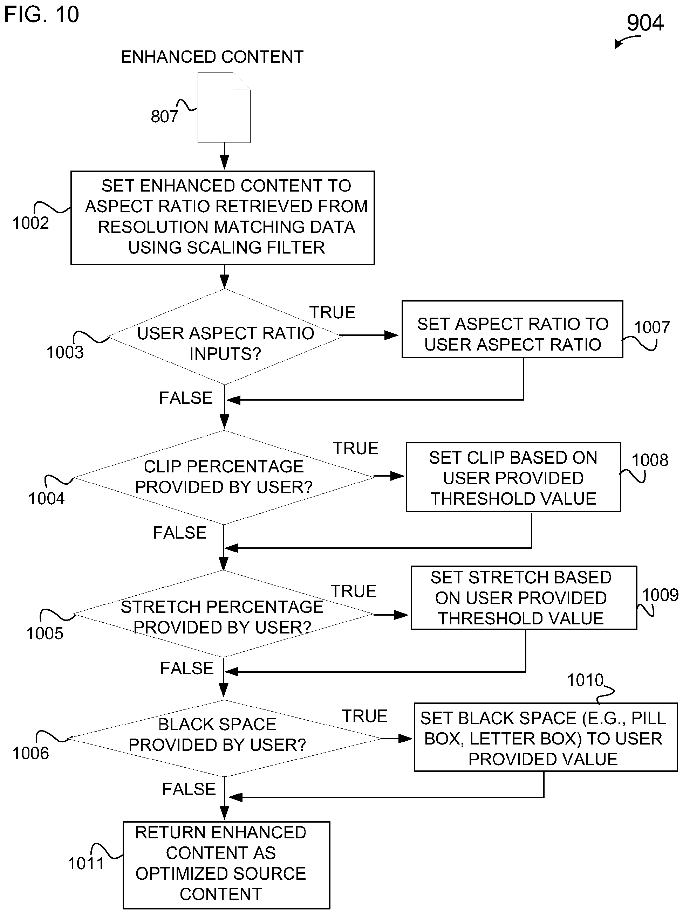

FIG. 10 is a flow chat illustrating an example method used to execute operation 904 to apply a scaling filter to set the enhanced content to the aspect ratio retrieved from the resolution matching data and to apply user variables to this enhanced content. Operation 1002 is executed to set enhanced content 807 to the aspect ratio retrieved from the resolution match data 120 using a scaling filter. This scaling filter may be a bicubic filter, or a bilinear interpolation filter. Decision operation 1003 is executed to determine whether there are user provided aspect ratio inputs. In cases where decision operation 1003 evaluates to "true", an operation 1007 is executed. Operation 1007 is set the aspect ratio to user provided aspect ratio input. In cases where decision operation 1003 evaluates to "false", decision operation 1004 is executed. Decision operation 1004 is executed to determine if a clip percentage of the enhanced content 807 has been provided, the percentage provided as a user provided aspect ratio inputs. In cases where decision operation 1004 evaluates to "true", an operation 1008 is executed. Operation 1008 is executed to set the clip percentage based upon a user provided threshold value by which the enhanced content 807 is to be truncated. For example, if the user provided threshold value is 10%, then the enhanced content 807 is to be truncated (i.e., "clipped") by no more than 10%. The enhanced content 807 is truncated by the clip percentage (e.g., 10%) through the execution of operation 1008. In some example embodiments, the "X" and "Y" pixel values for a destination resolution have differing threshold values (e.g., 10% for "X" and 5% for "Y"). In cases where decision operation 1004 evaluates to "false", a decision operation 1005 is executed. Decision operation 1005 is executed to determine whether a stretch percentage has been provided by a user. In cases where decision operation 1005 evaluates to "true", an operation 1009 is executed. Operation 1009 is executed to set the stretch for the enhanced content 807 based upon a user provided threshold value. For example, this threshold value for stretch may be 1.5 for "X" pixels and 1.75 for "Y" pixels such that "X" pixels should be stretched no more than 1.5 times that of the source content. Further, "Y" pixels should be stretched no more than 1.75 times that of the source content. The enhanced content 807 is stretched by this stretch value through the execution of operation 1009. In cases where the decision operation 1005 evaluates to "false", an operation 1006 is executed. Decision operation 1006 is executed to determine whether a black space value is provided by a user. Black space value, as used herein, is space on a display added to accommodate certain display settings (e.g., aspect ratio, clip, and stretch of source content in the form of an image). Examples of this black space are pill box and letter box. The space may be black in color, or some other suitable color. In cases where decision operation 1006 evaluates to "true", an operation 1010 is executed. Operation 1010 sets the black space value to the user provided value or to a value as determined through the execution of operations 1007-1009. This black space value may be a pill box value or a letter box value such that by executing operation 1010 the enhanced content 807 becomes framed as a pill box or letter box. In cases where decision operation 1006 evaluates to "false", an operation 1011 is executed to return the enhanced content 807 as optimized source content 111.

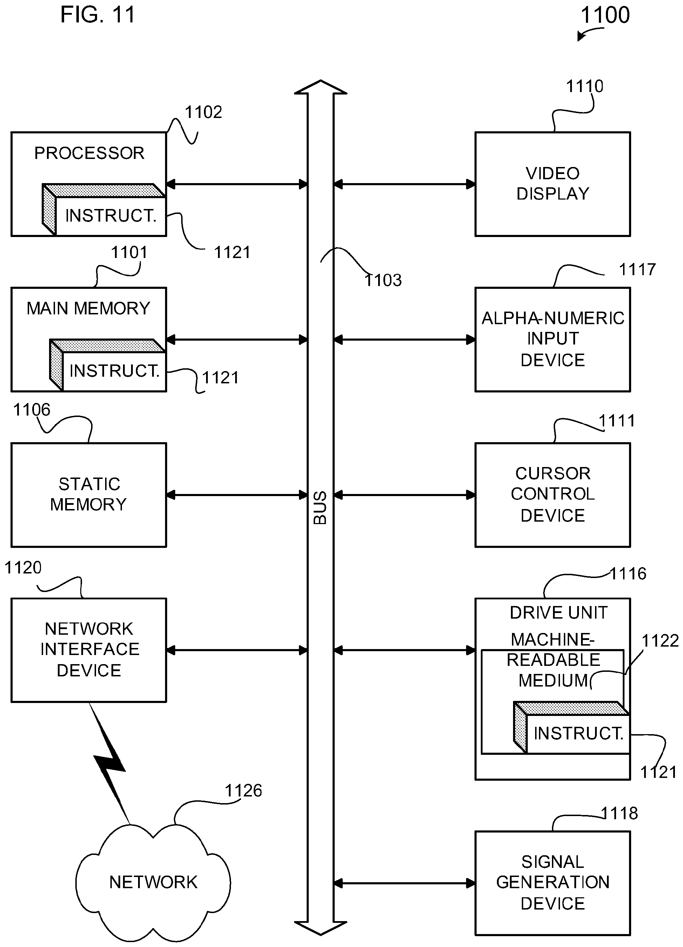

FIG. 11 shows a diagrammatic representation of a machine in the example form of a computer system 1100 that executes a set of instructions to perform any one or more of the methods discussed herein. In alternative embodiments, the machine operates as a standalone device or may be connected (e.g., networked) to other machines. In a networked deployment, the machine may operate in the capacity of a server or a client machine in server-client network environment or as a peer machine in a peer-to-peer (or distributed) network environment. The machine may be a PC, a tablet PC, a Set-Top Box (STB), a PDA, a cellular telephone, a Web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Example embodiments can also be practiced in distributed system environments where local and remote computer systems, which are linked (e.g., either by hardwired, wireless, or a combination of hardwired and wireless connections) through a network, both perform tasks such as those illustrated in the above description.

The example computer system 1100 includes a processor 1102 (e.g., a Central Processing Unit (CPU), a GPU or both), a main memory 1101, and a static memory 1106, which communicate with each other via a bus 1103. The computer system 1100 may further include a video display unit 1110 (e.g., a Liquid Crystal Display (LCD) or a Cathode Ray Tube (CRT)). The computer system 1100 also includes an alphanumeric input device 1117 (e.g., a keyboard), a User Interface (UI) cursor controller 1111 (e.g., a mouse), a disk drive unit 1116, a signal generation device 1118 (e.g., a speaker) and a network interface device (e.g., a transmitter) 1120.

The drive unit 1116 includes a machine-readable medium 1122 on which is stored one or more sets of instructions and data structures (e.g., software) embodying or used by any one or more of the methodologies or functions illustrated herein. The software may also reside, completely or at least partially, within the main memory 1101, the static memory 1106, and/or within the processor 1102 during execution thereof by the computer system 1100, the main memory 1101 and the processor 1102 also constituting machine-readable media 1122. The main memory may be an optical, magnetic, or solid state (e.g., flash) drive. The static memory 1106 may be a some form of non-volatile random access memory, or volatile memory in the form of a level 1 or level 2 cache.

The instructions 1121 may further be transmitted or received over the network 1126 via the network interface device 1120 using any one of a number of well-known transfer protocols (e.g., HTTP, Session Initiation Protocol (SIP)).

While the machine-readable medium is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. The term "machine-readable medium" shall accordingly be taken to included, but not be limited to, solid-state memories, optical and magnetic media, and carrier wave signals, including optical and electromagnetic signals. The terms machine-readable medium or computer-readable medium shall be taken to be synonymous.

In the foregoing description, numerous details are set forth to provide an understanding of the present invention. However, it will be understood by those skilled in the art that the present invention may be practiced without these details. While the invention has been disclosed with respect to a limited number of embodiments, those skilled in the art will appreciate numerous modifications and variations therefrom. It is intended that the appended claims cover such modifications and variations as fall within the scope of the invention.

## Claims

1. A computer implemented method comprising:
retrieving (702) resolution matching data (120) that includes a destination resolution as image size scaling data and an aspect ratio associated with a display device and user variables, the user variables including a clip percentage value, and a stretch percentage value;
retrieving (701) image source content (204) to be processed, in part, using the resolution matching data;
upscaling (701) the image source content using resolution synthesis to create enhanced content, the upscaling to terminate when a threshold matching percentage value of the image size scaling data is met; and
right sizing (702; 903, 904) the enhanced content to generate optimized image source content for display on the display device using the image size scaling data and aspect ratio from the resolution matching data,
wherein right sizing (702; 903; 904) comprises applying a scaling filter to set the enhanced content to the aspect ratio retrieved from the resolution matching data (120) and to apply the user variables to the enhanced content, and
wherein applying the user variables to the enhanced content comprises:
applying the clip percentage value to the enhanced content, the enhanced content to be truncated by no more than the clip percentage value and applying the stretch percentage value to the enhanced content, the enhanced content to be stretched by no more than the stretch percentage value.

2. The method of claim 1, wherein the resolution matching data further includes a black space value, the black space value indicating whether the enhanced content becomes framed as a pillar or letter box.

3. The method of claim 1 wherein the right sizing includes at least one of upscaling or down sampling.

4. The method of claim 1, wherein the scaling filter includes at least one of a decimation/duplication filter, a bicubic filter, a bilinear interpolation filter, least-squares filters, orthogonal wavelets filter, a biorthogonal wavelets filter, or a binomial filter.

5. A system comprising:
a source content device (113-117) to process image source content (204) for display, the process to include an application of a resolution synthesis and a right sizing process to the image source content (204) to generate optimized image source content; and
a bank of displays (101) to display the optimized image source content, the optimized image source content scaled to a destination resolution through the application of the resolution synthesis and the right sizing process;
wherein the resolution synthesis and right sizing process comprises:
retrieving (702) resolution matching data (120) that includes a destination resolution as image size scaling data and an aspect ratio associated with a display device and user variables, the user variables including a clip percentage value, and a stretch percentage value;
retrieving (701) image source content (204) to be processed, in part, using the resolution matching data;
upscaling (701) the image source content using resolution synthesis to create enhanced content, the upscaling to terminate when a threshold matching percentage value of the image size scaling data is met; and
right sizing (702; 903, 904) the enhanced content to generate optimized image source content for display on the display device using the image size scaling data and aspect ratio from the resolution matching data,
wherein right sizing (702; 903; 904) comprises applying a scaling filter to set the enhanced content to the aspect ratio retrieved from the resolution matching data (120) and to apply the user variables to the enhanced content, and
wherein applying the user variables to the enhanced content comprises:
applying the clip percentage value to the enhanced content, the enhanced content to be truncated by no more than the clip percentage value and applying the stretch percentage value to the enhanced content, the enhanced content to be stretched by no more than the stretch percentage value.

6. The system of claim 5, wherein the image source content (204) is received from a server (201).

7. The system of claim 6, wherein the image source content (204) is a lower resolution image as compared to a resolution of the optimized image source content.

8. The system of claim 5, wherein the source content device (113-117) is an embedded processor that physically resides on the bank of displays (101).

9. The system of claim 5, wherein the scaling filter includes at least one of a decimation/duplication filter, a bicubic filter, a bilinear interpolation filter, least-squares filters, orthogonal wavelets filter, a biorthogonal wavelets filter, or a binomial filter.

10. A non-transitory computer-readable medium having instructions stored thereon for causing a suitably programmed computer to execute the method according to one of claims 1 to 4.

## Patentansprüche

1. Computerimplementiertes Verfahren, Folgendes umfassend:
Abrufen (702) von Auflösungsanpassungsdaten (120), die eine Zielauflösung als Bildgrößenskalierungsdaten und ein Seitenverhältnis, das mit einer Anzeigevorrichtung und Benutzervariablen verknüpft ist, enthalten, wobei die Benutzervariablen einen Clipprozentsatzwert und einen Streckprozentsatzwert enthalten;
Abrufen (701) von Bildquelleninhalt (204), der zum Teil unter Verwendung der Auflösungsanpassungsdaten zu verarbeiten ist;
Hochskalieren (701) des Bildquelleninhalts unter Verwendung von Auflösungssynthese, um erweiterten Inhalt zu erzeugen, wobei das Hochskalieren endet, wenn ein Schwellenanpassungsprozentsatzwert der Bildgrößenskalierungsdaten erfüllt ist; und
Restrukturieren (702; 903, 904) des erweiterten Inhalts, um optimierten Bildquelleninhalt zur Anzeige auf der Anzeigevorrichtung unter Verwendung der Bildgrößenskalierungsdaten und des Seitenverhältnisses aus den Auflösungsanpassungsdaten zu erzeugen,
wobei das Restrukturieren (702; 903; 904) das Anwenden eines Skalierungsfilters umfasst, um den erweiterten Inhalt auf das Seitenverhältnis einzustellen, das aus den Auflösungsanpassungsdaten (120) abgerufen wird, und die Benutzervariablen auf den erweiterten Inhalt anzuwenden, und
wobei das Anwenden der Benutzervariablen auf den erweiterten Inhalt Folgendes umfasst:
Anwenden des Clipprozentsatzwertes auf den erweiterten Inhalt, wobei der erweiterte Inhalt um höchstens den Clipprozentsatzwert gekürzt wird, und Anwenden des Streckprozentsatzwertes auf den erweiterten Inhalt, wobei der erweiterte Inhalt um höchstens den Streckprozentsatzwert gestreckt wird.

2. Verfahren nach Anspruch 1, wobei die Auflösungsanpassungsdaten ferner einen Schwarzraumwert enthalten, wobei der Schwarzraumwert anzeigt, ob der erweiterte Inhalt als ein Säulen- oder Briefkasten umrahmt wird.

3. Verfahren nach Anspruch 1, wobei Restrukturieren ein Hochskalieren und/oder ein Herunterabtasten enthält.

4. Verfahren nach Anspruch 1, wobei das Skalierungsfilter ein Dezimierungs-/Duplizierungsfilter, ein bikubisches Filter, ein Filter der bilinearen Interpolation, ein Filter der kleinsten Quadrate, ein Filter von orthogonalen Wavelets, ein Filter von biorthogonalen Wavelets und/oder ein binomisches Filter enthält.

5. System, Folgendes umfassend:
eine Quelleninhaltsvorrichtung (113-117) zum Verarbeiten von Bildquelleninhalt (204) zum Anzeigen, wobei der Vorgang ein Anwenden einer Auflösungssynthese und eines Restrukturierungsvorgangs auf den Bildquelleninhalt (204) enthält, um optimierten Bildquelleninhalt zu erzeugen; und
eine Reihe von Anzeigen (101) zum Anzeigen des optimierten Bildquelleninhalts, wobei der optimierte Bildquelleninhalt durch das Anwenden der Auflösungssynthese und des Restrukturierungsvorgangs auf eine Zielauflösung skaliert wird;
wobei die Auflösungssynthese und der Restrukturierungsvorgang Folgendes umfassen:
Abrufen (702) von Auflösungsanpassungsdaten (120), die eine Zielauflösung als Bildgrößenskalierungsdaten und ein Seitenverhältnis, das mit einer Anzeigevorrichtung und Benutzervariablen verknüpft ist, enthalten, wobei die Benutzervariablen einen Clipprozentsatzwert und einen Streckprozentsatzwert enthalten;
Abrufen (701) von Bildquelleninhalt (204), der zum Teil unter Verwendung der Auflösungsanpassungsdaten zu verarbeiten ist;
Hochskalieren (701) des Bildquelleninhalts unter Verwendung von Auflösungssynthese, um erweiterten Inhalt zu erzeugen, wobei das Hochskalieren endet, wenn ein Schwellenwertanpassungsprozentsatzwert der Bildgrößenskalierungsdaten erfüllt ist; und
Restrukturieren (702; 903, 904) des erweiterten Inhalts, um optimierten Bildquelleninhalt zur Anzeige auf der Anzeigevorrichtung unter Verwendung der Bildgrößenskalierungsdaten und des Seitenverhältnisses aus den Auflösungsanpassungsdaten zu erzeugen,
wobei das Restrukturieren (702; 903; 904) das Anwenden eines Skalierungsfilters umfasst, um den erweiterten Inhalt auf das Seitenverhältnis einzustellen, das aus den Auflösungsanpassungsdaten (120) abgerufen wird, und die Benutzervariablen auf den erweiterten Inhalt anzuwenden, und
wobei das Anwenden der Benutzervariablen auf den erweiterten Inhalt Folgendes umfasst:
Anwenden des Clipprozentsatzwertes auf den erweiterten Inhalt, wobei der erweiterte Inhalt um höchstens den Clipprozentsatzwert gekürzt wird, und Anwenden des Streckprozentsatzwertes auf den erweiterten Inhalt, wobei der erweiterte Inhalt um höchstens den Streckprozentsatzwert gestreckt wird.

6. System nach Anspruch 5, wobei der Bildquelleninhalt (204) von einem Server (201) empfangen wird.

7. System nach Anspruch 6, wobei der Bildquelleninhalt (204) im Vergleich zu einer Auflösung des optimierten Bildquelleninhalts ein Bild mit einer geringeren Auflösung ist.

8. System nach Anspruch 5, wobei die Quelleninhaltsvorrichtung (113-117) ein eingebetteter Prozessor ist, der physisch auf der Reihe von Anzeigen (101) gespeichert ist.

9. System nach Anspruch 5, wobei das Skalierungsfilter ein Dezimierungs-/Duplizierungsfilter, ein bikubisches Filter, ein Filter der bilinearen Interpolation, ein Filter der kleinsten Quadrate, ein Filter von orthogonalen Wavelets, ein Filter von biorthogonalen Wavelets und/oder ein binomisches Filter enthält.

10. Nicht-flüchtiges computerlesbares Medium mit darauf gespeicherten Anweisungen, um zu bewirken, dass ein geeignet programmierter Computer das Verfahren nach einem der Ansprüche 1 bis 4 ausführt.

## Revendications

1. Procédé mis en oeuvre par ordinateur comprenant :
la récupération (702) de données (120) de mise en correspondance de résolutions qui comprennent une résolution de destination sous forme de données de mise à l'échelle de la taille d'une image et d'un rapport hauteur/largeur associés à un dispositif d'affichage et des variables d'utilisateur, les variables d'utilisateur comprenant une valeur de pourcentage de découpe et une valeur de pourcentage d'étirement ;
la récupération (701) d'un contenu visuel source (204) à traiter, en partie, en utilisant les données de mise en correspondance de résolutions ;
la mise à l'échelle supérieure (701) du contenu visuel source en utilisant une synthèse de résolution pour créer un contenu amélioré, la mise à l'échelle supérieure devant se terminer lorsqu'une valeur seuil de pourcentage de mise en correspondance des données de mise à l'échelle de la taille de l'image est atteinte ; et
le rajustement (702 ; 903, 904) du contenu amélioré pour générer un contenu visuel source optimisé pour un affichage sur le dispositif d'affichage en utilisant les données de mise à l'échelle de la taille de l'image et le rapport hauteur/largeur provenant des données de mise en correspondance de résolutions,
le rajustement (702 ; 903, 904) comprenant l'application d'un filtre de mise à l'échelle pour paramétrer le contenu amélioré selon le rapport hauteur/largeur récupéré à partir des données de mise en correspondance de résolutions (120) et pour appliquer les variables d'utilisateur au contenu amélioré, et
l'application des variables d'utilisateur au contenu amélioré comprenant :
l'application de la valeur de pourcentage de découpe au contenu amélioré, le contenu amélioré devant être rogné d'une valeur ne dépassant celle du pourcentage de découpe et l'application de la valeur de pourcentage d'étirement au contenu amélioré, le contenu amélioré devant être étiré d'une valeur ne dépassant pas celle du pourcentage d'étirement.

2. Procédé selon la revendication 1, dans lequel les données de mise en correspondance de résolutions comprennent en outre une valeur d'espace noir, la valeur d'espace noir indiquant si le contenu amélioré est encadré au format portrait ou paysage.

3. Procédé selon la revendication 1, dans lequel le rajustement comprend au moins une opération parmi une mise à l'échelle supérieure ou un sous-échantillonnage.

4. Procédé selon la revendication 1, dans lequel le filtre de mise à l'échelle comprend au moins un filtre parmi un filtre de décimation/duplication, un filtre bicubique, un filtre d'interpolation bilinéaire, des filtres des moindres carrés, un filtre d'ondelettes orthogonales, un filtre d'ondelettes bi-orthogonales, ou un filtre binomial.

5. Système comprenant :
un dispositif de contenu source (113-117) pour traiter un contenu visuel source (204) pour l'affichage, le procédé devant inclure une application d'un procédé de synthèse de résolution et de rajustement au contenu visuel source (204) pour générer un contenu visuel source optimisé ; et
un ensemble d'écrans (101) pour afficher le contenu visuel source optimisé, le contenu visuel source optimisé mis à l'échelle selon une résolution de destination par l'application du procédé de synthèse de résolution et de rajustement ;
le procédé de synthèse de résolution et de rajustement comprenant :
la récupération (702) de données (120) de mise en correspondance de résolutions qui comprennent une résolution de destination sous forme de données de mise à l'échelle de la taille d'une image et d'un rapport hauteur/largeur associés à un dispositif d'affichage et des variables d'utilisateur, les variables d'utilisateur comprenant une valeur de pourcentage de découpe et une valeur de pourcentage d'étirement ;
la récupération (701) d'un contenu visuel source (204) à traiter, en partie, en utilisant les données de mise en correspondance de résolutions ;
la mise à l'échelle supérieure (701) du contenu visuel source en utilisant une synthèse de résolution pour créer un contenu amélioré, la mise à l'échelle supérieure devant se terminer lorsqu'une valeur seuil de pourcentage de mise en correspondance des données de mise à l'échelle de la taille de l'image est atteinte ; et
le rajustement (702 ; 903, 904) du contenu amélioré pour générer un contenu visuel source optimisé pour un affichage sur le dispositif d'affichage en utilisant les données de mise à l'échelle de la taille de l'image et le rapport hauteur/largeur provenant des données de mise en correspondance de résolutions,
le rajustement (702 ; 903, 904) comprenant l'application d'un filtre de mise à l'échelle pour paramétrer le contenu amélioré selon le rapport hauteur/largeur récupéré à partir des données de mise en correspondance de résolutions (120) et pour appliquer les variables d'utilisateur au contenu amélioré, et
l'application des variables d'utilisateur au contenu amélioré comprenant :
l'application de la valeur de pourcentage de découpe au contenu amélioré, le contenu amélioré devant être rogné d'une valeur ne dépassant celle du pourcentage de découpe et l'application de la valeur de pourcentage d'étirement au contenu amélioré, le contenu amélioré devant être étiré d'une valeur ne dépassant pas celle du pourcentage d'étirement.

6. Système selon la revendication 5, dans lequel le contenu visuel source (204) est reçu d'un serveur (201).

7. Système selon la revendication 6, dans lequel le contenu visuel source (204) est une image à la résolution plus faible comparée à une résolution du contenu visuel source optimisé.

8. Système selon la revendication 5, dans lequel le dispositif de contenu source (113-117) est un processeur intégré qui réside physiquement sur l'ensemble d'écrans (101).

9. Système selon la revendication 5, dans lequel le filtre de mise à l'échelle comprend au moins un filtre parmi un filtre de décimation/duplication, un filtre bicubique, un filtre d'interpolation bilinéaire, des filtres des moindres carrés, un filtre d'ondelettes orthogonales, un filtre d'ondelettes bi-orthogonales, ou un filtre binomial.

10. Support non transitoire lisible par ordinateur sur lequel sont stockés des instructions pour faire exécuter à un ordinateur programmé de manière adéquate le procédé selon l'une quelconque des revendications 1 à 4.
